# EUROPEAN PATENT SPECIFICATION

(11) **EP 4 195 036 B1**
(45) Date of publication and mention of the grant of the patent: **27.11.2024**
(21) Application number: 20950552.8
(22) Date of filing: 24.08.2020
(51) Int. Cl.: G06F 9/30, G06F 9/448

(54) **GRAPH INSTRUCTION PROCESSING METHOD AND DEVICE**
GRAFIKBEFEHLSVERARBEITUNGSVERFAHREN UND -VORRICHTUNG
PROCÉDÉ ET DISPOSITIF DE TRAITEMENT D'INSTRUCTION DE GRAPHE

(43) Date of publication of application: 14.06.2023
(73) Proprietor: Huawei Technologies Co., Ltd., Shenzhen, Guangdong 518129 (CN)
(72) Inventor: ZHOU, Ruoyu, Shenzhen, Guangdong 518129 (CN); ZHU, Fan, Shenzhen, Guangdong 518129 (CN); SUN, Wenbo, Shenzhen, Guangdong 518129 (CN); ZHOU, Xiping, Shenzhen, Guangdong 518129 (CN)
(74) Representative: Gill Jennings & Every LLP
(86) International application number: PCT/CN2020/110868
(87) International publication number: WO 2022/040877

(56) References cited:
- WO-A2-2006/074024
- CN-A- 102 750 474
- CN-A- 104 025 502
- CN-A- 109 325 899
- US-A1- 2011 276 792
- US-A1- 2017 083 335

## Description

### TECHNICAL FIELD

This application relates to the field of computer technologies, and in particular, to a graph instruction processing method and apparatus.

### BACKGROUND

A directed graphflow computing architecture (graphflow architecture) converts a data flow and a control flow into a directed graph including N nodes. A connecting line between nodes represents a data flow (data flow) or a control flow (control flow). In the directed graphflow computing architecture, a degree of parallelism of the data flow is triggered by detecting whether an input of each node in the directed graphflow computing architecture is ready (ready), so that a plurality of nodes that are not on a same path can run concurrently.

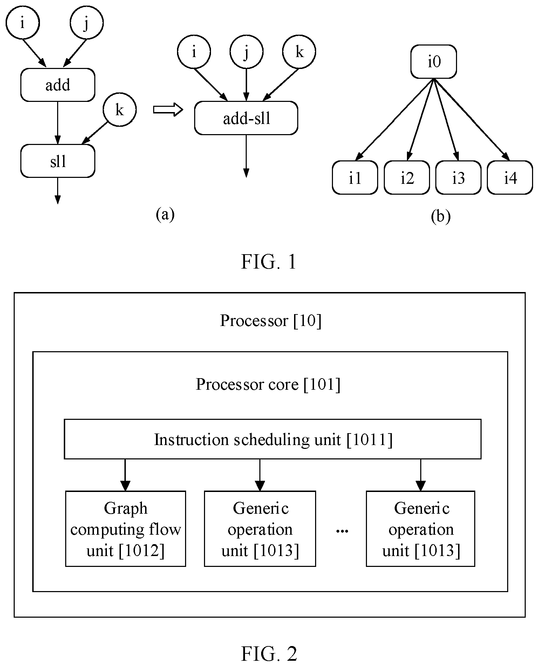

In the directed graphflow computing architecture, a majority of graph instructions usually each have two data inputs and one or two output IDs, a minority of graph instructions each have at least three data inputs or at least three output IDs, and a buffer configured to temporarily store a data input and an output ID of one graph instruction is configured based on two data inputs and two output IDs. A graph instruction having at least three data inputs is usually a composite graph instruction whose operation is completed within one beat and that is obtained by compressing a plurality of instructions whose operation is completed within a plurality of beats, and an instruction having at least three output IDs usually needs to output an operation result of the graph instruction to an input of a plurality of other graph instructions. For example, (a) in FIG. 1 shows a graph instruction add-sll having three data inputs (that is, i, j, and k). The instruction add-sll is a composite instruction obtained by compressing graph instructions add and sll. Alternatively, (b) in FIG. 1 shows a graph instruction having four output IDs (that is, i1, i2, i3, and i4). If a computing result of the graph instruction is 10, i0 needs to be output to i1, i2, i3, and i4.

In the conventional technology, a graph instruction having at least three data inputs is usually processed in the following manners. Manner 1: An input port of an original graph instruction is reused for a corresponding composite graph instruction. For example, data inputs i, j, and k of the graph instructions add and sll are simultaneously read at a specific time point, and i, j, and k are transmitted to an operation unit of add-sll. In this manner, pressure of simultaneously reading the data inputs is increased. In addition, because only two data inputs need to be read for a majority of instructions, difficulty of bypass (bypass) logic is increased. Manner 2: An input port of an original graph instruction is rewritten to an operation unit of a composite graph instruction through rescheduling. For example, writing of i, j, and k is rescheduled to an operation unit of add-sll. In this manner, a specific rescheduling logic unit needs to be provided, to increase implementation difficulty of hardware and increase hardware costs.

A graph instruction having at least three output IDs is usually processed in the following manners. Manner 1: A quantity of bits (bit) occupied by an output ID is expanded. For example, original 32 bits are uniformly expanded to 64 bits. However, a majority of graph instructions each have only one or two output IDs, wasting instruction space. Manner 2: A CISC encoding manner is used. To be specific, a quantity of output IDs is added to a graph instruction format, to adjust an encoding width. However, in this manner, decoding difficulty of hardware is increased, to generate large power consumption. Manner 3: An output ID is limited. To be specific, a plurality of output IDs share a same high-order bit, and respectively use different low-order bits. However, in this manner, a plurality of output IDs obtained through encoding are adjacent, and a location of the output ID is limited, to greatly limit a scheduling capability and reduce performance of a computing architecture.

US 2017/083335 A1 describes broadcast channel architectures for block-based processors, where a processor core in a block-based processor comprises: one or more functional units configured to perform functions using one or more operands; an instruction window comprising buffers configured to store individual instructions for execution by the processor core, a control unit configured to execute the instructions in the instruction window and control operation of the one or more functional units; and a broadcast value store comprising a plurality of buffers dedicated to storing broadcast values.

### SUMMARY

The present invention is defined by the features disclosed in the independent claims. Additional embodiments are defined in the dependent claims. This application provides a graph instruction processing method and apparatus, to improve performance of a directed graphflow computing architecture.

To achieve the foregoing objectives, the following technical solutions are used in embodiments of this application.

According to a first aspect, a graph instruction processing method is provided, and is applied to a processor. The method includes: detecting whether a first input and a second input of a first graph instruction are in a ready-to-complete state, where the first input and/or the second input are or is a dynamic data input or dynamic data inputs of the first graph instruction; obtaining static data input information of the first graph instruction from a first register when the first input and the second input are both in the ready-to-complete state, where the static data input information is used to indicate at least one input, each of the at least one input is a constant input or a temporary constant input, and the temporary constant input is an input that does not change in a period of time; and processing the first graph instruction based on the first input, the second input, and the at least one input, to obtain a first processing result.

In the technical solution, for a first graph instruction having at least three data inputs, the at least three data inputs usually include one or two dynamic data inputs and one or more static data inputs, and the one or more static data inputs may be stored in the first register. Subsequently, the processor may process the first graph instruction by detecting whether the first input and the second input of the first graph instruction are in the ready-to-complete state, and obtaining the static data input of the first graph instruction from the first register when the first input and the second input are in the ready-to-complete state, to avoid interference of intermediate-state data of the first graph instruction to another data flow, reduce a transfer operation of the static data input of the first graph instruction, increase reuse efficiency of the static data input, and improve performance of a directed graphflow computing architecture.

In a possible implementation of the first aspect, the first graph instruction is provided with an input pointer bitfield, the input pointer bitfield includes a first pointer, and the first pointer is used to indicate the first register. In the possible implementation, the first pointer is used to indicate the first register, so that the processor can quickly and effectively determine the first register, to obtain the static data input stored in the first register.

In a possible implementation of the first aspect, the at least one input includes a plurality of inputs, and the method further includes: decoding the static data input information based on a preset decoding policy associated with an operator of the first graph instruction, to obtain the plurality of inputs. In the possible implementation, when the first register stores a plurality of inputs, the processor may perform decoding based on the preset decoding policy, to obtain the plurality of inputs.

In a possible implementation of the first aspect, the first graph instruction has at least three output addresses, an output address bitfield of the first graph instruction is used to indicate one or two output addresses in the at least three output addresses, an output address other than the one or two output addresses in the at least three output addresses is stored in a second register, and the method further includes: sending the first processing result to the one or two output addresses; and obtaining output address information of the first graph instruction from the second register, and sending the first processing result to an output address indicated by the output address information. In the possible implementation, when the first graph instruction has at least three output addresses, one or more output addresses in the at least three output addresses may be stored in the second register, so that the one or more output addresses of the first graph instruction may be subsequently obtained from the second register, and the first processing result is sent to each output address, to implement result processing of a graph instruction having at least three output addresses.

In a possible implementation of the first aspect, the output address bitfield includes one output address and a second pointer, and the second pointer is used to indicate the second register; or the output address bitfield includes two output addresses, the first graph instruction is further provided with an output pointer bitfield, the output pointer bitfield includes a second pointer, and the second pointer is used to indicate the second register. In the possible implementation, the second pointer included in the output address bitfield or the output pointer bitfield is used to indicate the second register, to improve flexibility and diversity of indicating the second register.

In a possible implementation of the first aspect, the method further includes: decoding the output address information, to obtain at least one output address; and correspondingly, the sending the first processing result to an output address indicated by the output address information includes: sending the first processing result to each of the at least one output address. In the possible implementation, it can be ensured that a graph instruction having at least three output addresses in an instruction set is configured in the directed graphflow computing architecture in a regular format.

According to a second aspect, a graph instruction processing method is provided. The method includes: determining a first processing result of a first graph instruction, where the first graph instruction has at least three output addresses, an output address bitfield of the first graph instruction is used to indicate one or two output addresses in the at least three output addresses, and an output address other than the one or two output addresses in the at least three output addresses is stored in a second register; sending the first processing result to the one or two output addresses; and obtaining output address information of the first graph instruction from the second register, and sending the first processing result to an output address indicated by the output address information.

In the technical solution, when the first graph instruction has at least three output addresses, one or more output addresses in the at least three output addresses may be stored in the second register, so that it can be ensured that a graph instruction having at least three output addresses in an instruction set is configured in a directed graphflow computing architecture in a regular format. Subsequently, when the first processing result of the first graph instruction is output, one or more output addresses of the first graph instruction may be obtained from the second register, and the first processing result may be sent to each output address, to implement result processing of a graph instruction having at least three output addresses. In addition, compared with the conventional technology, in the method, instruction space is not wasted, and large power consumption is not generated, to ensure that the computing architecture has better performance.

In a possible implementation of the second aspect, the output address bitfield includes one output address and a second pointer, and the second pointer is used to indicate the second register; or the output address bitfield includes two output addresses, the first graph instruction is further provided with an output pointer bitfield, the output pointer bitfield includes a second pointer, and the second pointer is used to indicate the second register. In the possible implementation, the second pointer included in the output address bitfield or the output pointer bitfield is used to indicate the second register, to improve flexibility and diversity of indicating the second register.

In a possible implementation of the second aspect, the method further includes: decoding the output address information, to obtain at least one output address; and correspondingly, the sending the first processing result to an output address indicated by the output address information includes: sending the first processing result to each of the at least one output address. In the possible implementation, it can be ensured that a graph instruction having at least three output addresses in an instruction set is configured in the directed graphflow computing architecture in a regular format.

According to a third aspect, a graph instruction processing apparatus is provided. The apparatus includes: a detection unit, configured to detect whether a first input and a second input of a first graph instruction are in a ready-to-complete state, where the first input and/or the second input are or is a dynamic data input or dynamic data inputs of the first graph instruction; and a first operation unit, configured to obtain static data input information of the first graph instruction from a first register when the first input and the second input are both in the ready-to-complete state, where the static data input information is used to indicate at least one input, each of the at least one input is a constant input or a temporary constant input, and the temporary constant input is an input that does not change in a period of time. The first operation unit is further configured to process the first graph instruction based on the first input, the second input, and the at least one input, to obtain a first processing result.

In a possible implementation of the third aspect, the first graph instruction is provided with an input pointer bitfield, the input pointer bitfield includes a first pointer, and the first pointer is used to indicate the first register.

In a possible implementation of the third aspect, the at least one input includes a plurality of inputs, and the first operation unit is further configured to decode the static data input information based on a preset decoding policy associated with an operator of the first graph instruction, to obtain the plurality of inputs.

In a possible implementation of the third aspect, the first graph instruction has at least three output addresses, an output address bitfield of the first graph instruction is used to indicate one or two output addresses in the at least three output addresses, an output address other than the one or two output addresses in the at least three output addresses is stored in a second register, and the apparatus further includes a second operation unit. The first operation unit is further configured to send the first processing result to the one or two output addresses; and the second operation unit is configured to: obtain output address information of the first graph instruction from the second register, and send the first processing result to an output address indicated by the output address information.

In a possible implementation of the third aspect, the output address bitfield includes one output address and a second pointer, and the second pointer is used to indicate the second register; or the output address bitfield includes two output addresses, the first graph instruction is further provided with an output pointer bitfield, the output pointer bitfield includes a second pointer, and the second pointer is used to indicate the second register.

In a possible implementation of the third aspect, the first operation unit is further configured to: decode the output address information, to obtain at least one output address; and send the first processing result to each of the at least one output address.

According to a fourth aspect, a graph instruction processing apparatus is provided. The apparatus includes: a first operation unit, configured to determine a first processing result of a first graph instruction, where the first graph instruction has at least three output addresses, an output address bitfield of the first graph instruction is used to indicate one or two output addresses in the at least three output addresses, and an output address other than the one or two output addresses in the at least three output addresses is stored in a second register, where the first operation unit is further configured to send the first processing result to the one or two output addresses; and a second operation unit, configured to: obtain output address information of the first graph instruction from the second register, and send the first processing result to an output address indicated by the output address information.

In a possible implementation of the fourth aspect, the output address bitfield includes one output address and a second pointer, and the second pointer is used to indicate the second register; or the output address bitfield includes two output addresses, the first graph instruction is further provided with an output pointer bitfield, the output pointer bitfield includes a second pointer, and the second pointer is used to indicate the second register.

In a possible implementation of the fourth aspect, the first operation unit is further configured to: decode the output address information, to obtain at least one output address; and send the first processing result to each of the at least one output address.

According to another aspect of this application, a graph instruction processing apparatus is provided. The apparatus may be a graph instruction processing device or a chip built into the graph instruction processing device, the apparatus includes a processor, the processor is coupled to a memory, the memory stores instructions, and when the processor executes the instructions in the memory, the apparatus is enabled to perform the method according to any one of the first aspect or the possible implementations of the first aspect.

According to another aspect of this application, a graph instruction processing apparatus is provided. The apparatus may be a graph instruction processing device or a chip built into the graph instruction processing device, the apparatus includes a processor, the processor is coupled to a memory, the memory stores instructions, and when the processor executes the instructions in the memory, the apparatus is enabled to perform the method according to any one of the second aspect or the possible implementations of the second aspect.

According to another aspect of this application, a readable storage medium is provided. The readable storage medium stores instructions. When the readable storage medium runs on a device, the device is enabled to perform the method according to any one of the first aspect or the possible implementations of the first aspect.

According to another aspect of this application, a readable storage medium is provided. The readable storage medium stores instructions. When the readable storage medium runs on a device, the device is enabled to perform the method according to any one of the second aspect or the possible implementations of the second aspect.

According to another aspect of this application, a computer program product is provided. When the computer program product runs on a computer, the computer is enabled to perform the method according to any one of the first aspect or the possible implementations of the first aspect.

According to another aspect of this application, a computer program product is provided. When the computer program product runs on a computer, the computer is enabled to perform the method according to any one of the second aspect or the possible implementations of the second aspect.

It can be understood that the apparatus, the computer storage medium, or the computer program product of any of the graph instruction processing methods is used to perform a corresponding method provided above. Therefore, for beneficial effects that can be achieved, refer to the beneficial effects in the corresponding method provided above. Details are not described herein again.

### BRIEF DESCRIPTION OF DRAWINGS

FIG. 1 is a schematic diagram of a graph instruction having a plurality of inputs and a graph instruction having a plurality of outputs;
FIG. 2 is a schematic diagram of a structure of a processor according to an embodiment of this application;
FIG. 3 is a schematic diagram of a structure of another processor according to an embodiment of this application;
FIG. 4 is a schematic diagram of different stages of a computing architecture according to an embodiment of this application;
FIG. 5 is a schematic diagram of different stages of another computing architecture according to an embodiment of this application;
FIG. 6 is a schematic flowchart of a graph instruction processing method according to an embodiment of this application;
FIG. 7 is a schematic diagram of a graph instruction having a plurality of inputs according to an embodiment of this application;
FIG. 8 is a schematic flowchart of another graph instruction processing method according to an embodiment of this application;
FIG. 9 is a schematic diagram of a graph instruction having a plurality of outputs according to an embodiment of this application;
FIG. 10 is a schematic diagram of a register according to an embodiment of this application;
FIG. 11 is a schematic flowchart of a graph instruction processing method according to an embodiment of this application;
FIG. 12 is a schematic diagram of a graph instruction according to an embodiment of this application; and
FIG. 13 is a schematic diagram of a structure of a graph instruction processing apparatus according to an embodiment of this application.

### DESCRIPTION OF EMBODIMENTS

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c. Herein, a, b, and c may be singular or plural. In addition, in embodiments of this application, the words such as "first" and "second" do not limit a quantity or an execution sequence.

It should be noted that, in embodiments of this application, the term such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

First, before embodiments of this application are described, a pipeline structure and a processor architecture in this application are described by using an example.

An instruction pipeline is a manner in which an operation of one instruction is divided into a plurality of small steps for processing, to improve efficiency of executing the instruction by a processor. Each step may be completed by a corresponding unit. A life cycle of one instruction in the pipeline structure may include: instruction fetch pipeline -> decoding pipeline -> scheduling (transmitting) pipeline -> execution pipeline -> memory access pipeline -> write-back pipeline. In other words, in the pipeline structure, an execution process of one instruction is divided into at least six stages.

The instruction fetch pipeline is used for instruction fetching (instruction fetch), that is, a process of reading the instruction from a memory.

The decoding pipeline is used for instruction decoding (instruction decode), that is, a process of translating the instruction fetched from the memory.

The scheduling (transmitting) pipeline is used for instruction scheduling and transmitting (instruction dispatch and issue). To be a specific, a register is read, to obtain an operand, and the instruction is sent to a corresponding execution unit for execution based on a type of the instruction.

The execution pipeline is used to perform instruction execution (instruction execute) based on the type of instruction, to complete a computing task. Instruction execution is a process of performing a real operation on the instruction. For example, if the instruction is an addition operation instruction, an addition operation is performed on the operand; if the instruction is a subtraction operation instruction, a subtraction operation is performed; and if the instruction is graph computing, a graph computing operation is performed.

Memory access (memory access) pipeline: Memory access is a process in which a memory access instruction is used to read data from the memory or write data to the memory, and is mainly executing a read/write (load/store) instruction.

Write-back (write back) pipeline: Write-back is a process of writing an instruction execution result back to a general-purpose register group. If the instruction is a normal operation instruction, a result value comes from a computing result of an "execution" stage; and if the instruction is a memory read instruction, the result comes from data read from the memory in an "access" stage.

In the pipeline structure, the operation steps are performed on each instruction in the processor, but different operation steps of a plurality of instructions can be executed simultaneously, so that an overall instruction flow speed can be accelerated and a program execution time period can be shortened.

FIG. 2 is a schematic diagram of a structure of a processor 10 according to an embodiment of this application. The processor 10 may be located in any electronic device, for example, various types of devices such as a computer, a computer, a mobile phone, a tablet, a personal digital assistant, an intelligent wearable device, an intelligent vehicle-mounted device, or an intelligent household appliance. The processor 10 may be specifically a chip, a chip set, or a circuit board on which the chip or the chip set is mounted. The chip, the chip set, or the circuit board on which the chip or the chip set is mounted may operate under a necessary software drive.

Specifically, the processor 10 may include at least one processor core 101, and the processor core 101 may include an instruction scheduling unit 1011, a graph computing flow unit 1012 connected to the instruction scheduling unit 1011, and at least one generic operation unit 1013. The instruction scheduling unit 1011 runs in a transmitting pipeline stage of the processor core 101, to complete scheduling and distribution of a to-be-executed instruction. The graph computing flow unit 1012 and the at least one generic operation unit 1013 each runs as an execution unit (which may also referred to as a functional unit) of the processor 10 in an execution pipeline stage (execute stage), to complete various types of computing tasks. Specifically, the processor 10 may directly allocate a graph computing task in the to-be-executed instruction to the graph computing flow unit 1012 for execution by using the instruction scheduling unit 1011, to implement a function of accelerating a general purpose processor by using a graph computing mode. The general-purpose computing task in the to-be-executed instruction is scheduled to the at least one generic operation unit 1013 for execution, to implement a general-purpose computing function. Optionally, based on different computing tasks, the processor 10 may independently invoke only the graph computing flow unit 1012 to execute a task, or independently invoke the at least one generic operation unit 1013 to execute a task, or may invoke both the graph computing flow unit 1012 and the at least one generic operation unit 1013 to execute a task in parallel. It can be understood that the instruction scheduling unit 1011 may be connected to the graph computing flow unit 1012 and the at least one generic operation unit 1013 through a bus or in another manner, to perform direct communication. A connection relationship illustrated in FIG. 1 does not constitute a limitation on a connection relationship among the instruction scheduling unit 1011, the graph computing flow unit 1012, and the at least one generic operation unit 1013.

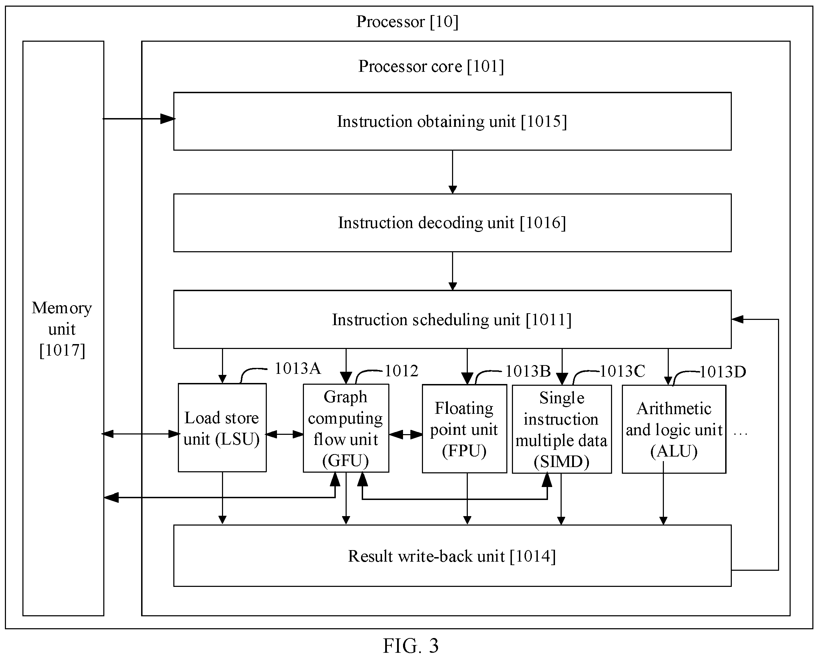

In a possible implementation, FIG. 3 is a schematic diagram of a structure of another processor 10 according to an embodiment of this application. A processor core 101 may further include an instruction obtaining unit 1015 and an instruction decoding unit 1016, and the instruction obtaining unit 1015 and the instruction decoding unit 1016 respectively run in an instruction fetch pipeline stage and a decoding pipeline stage, and complete corresponding instruction fetching function and instruction decoding functions.

Optionally, as shown in FIG. 3, at least one generic operation unit 1013 may specifically include one or more of a load store unit (load store unit, LSU) 1013A, a floating point unit (floating point unit, FPU) 1013B, a single instruction multiple data (single instruction multiple data, SIMD) 1013C, and an arithmetic and logic unit (arithmetic and logic unit, ALU) 1013D. The plurality of generic operation units (including 1013A, 1013B, 1013C, and 1013D) and the graph computing flow unit 1012 each are connected to the instruction scheduling unit 1011, and run as execution units of the processor core 101 in an execution pipeline stage. The execution units each receive a different type of instruction scheduled by the instruction scheduling unit 1011, and then execute, based on respective different hardware structures, an operation task of a type that the execution unit is good at. Further, optionally, a memory unit (memory) 1017 is further included outside the processor core 101 of the processor 10, and the load store unit 1013A reads and writes data from the memory unit 1017 in a memory access pipeline stage. Still further, optionally, the processor core 101 further includes a result write-back unit 1014. The result write-back unit 1014 runs in a write-back pipeline stage, and is responsible for writing an instruction computing result back to a destination register. Optionally, the memory unit 1017 is usually a volatile memory, when being powered off, loses content stored in the volatile memory, and may also be referred to as a memory (memory) or a main memory. The memory unit 1017 may serve as a storage medium for temporary data of an operating system or another running program in the processor 10. For example, the operating system running on the processor 10 transfers, from the memory unit 1017 to the processor core 101 for operation, data that needs to be operated, and when the operation is completed, the processor core 101 transmits the result. The memory unit 1017 may include one or more of a dynamic random access memory (dynamic random access memory, DRAM), a static random access memory (static random access memory, SRAM), a synchronous dynamic random access memory (synchronous dynamic random access memory, SDRAM), a level 1 cache (L1 cache), a level 2 cache (L2 cache), a level 3 cache (L3 cache), and the like.

It should be noted that functional modules inside the processor in FIG. 3 may communicate with each other through a bus or in another connection manner, and a connection relationship shown in FIG. 3 does not constitute a limitation on a connection relationship between the functional modules. Various functional modules are further described in a subsequent embodiments. Details are described in detail herein.

It can be understood that a pipeline structure and a processor architecture of the instruction are merely some example implementations provided in embodiments of this application, and the pipeline structure and the processor architecture in embodiments of this application include but are not limited to the foregoing implementations.

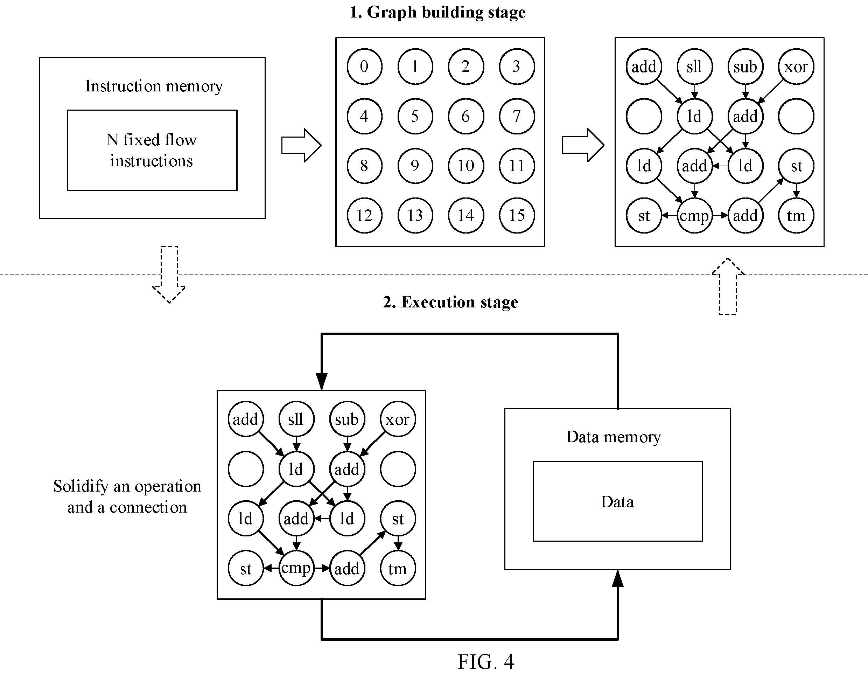

The following describes in detail a directed graphflow computing architecture in this application. Refer to FIG. 4. The directed graphflow (graphflow) architecture in this application may be abstracted into N fully connected computing nodes (corresponding to vertices of a graph). Each node may store one instruction, perform one operation, and transmit a result to the node or another node. The directed graphflow computing architecture may be divided into two stages between which repeated switching is performed:
1. Graph building stage (graph build): Each node in a graph building block is configured with one operation instruction and a maximum of two target nodes by reading N instructions from an instruction memory. There are a total of zero to 15 computing nodes when N is equal to 16. Once a graph is built, an operation and a connection of each node are solidified (read-only). For example, an operation instruction in a computing node 0 is an add instruction. In other words, an addition operation is performed. An operation instruction in a computing node 1 is an sll instruction. In other words, a shift operation is performed. An operation instruction in a computing node 3 is an xor instruction. In other words, an exclusive OR operation. For a computing node 5, operation results of the computing node 0 and the computing node 1 are used as inputs into the computing node, to perform an ld operation (namely, a fetch operation); for a computing node 6, operation results of the computing node 2 and the computing node 3 are used as inputs into the computing node, to perform an add operation (namely, an addition operation), and so on. An operation process of another computing node is not described one by one.
2. Execution stage (graph execute): An external module transmits an input (liveIn), to initiate a data flow. All computing nodes run in parallel. For each node, provided that an input into the node arrives, the node can perform an operation and transmit a result to a next computing node. The node is in a waiting state until the input arrives. Running continues until the data flow arrives at an end node (tm). Input parameters of some computing nodes (for example, computing nodes 0, 1, 2, and 3) are input externally. To be specific, start-up data needs to be input from the external memory unit 1017. Some other computing nodes (for example, computing nodes 5, 6, 8, 9, 10, 11, 12, 13, 14, and 15) need to internally obtain computing results output by a computing node connected to the computing nodes, can perform an operation, and can input, into the computing node connected to the computing nodes, a result obtained after the operation.

Based on the directed graphflow computing architecture provided in this application, when an instruction scheduling unit 1011 of the processor 10 schedules a control instruction to a graph computing flow unit 1012 to execute an instruction task, a plurality of control instructions of different functions are included, to indicate the graph computing flow unit 1012 to execute a corresponding graph computing function. In terms of a time sequence, the control instruction provided in this application mainly includes: graph building start instruction -> parameter transmission instruction -> graph computing start instruction -> parameter return instruction.

The graph building start instruction carries a target address. When receiving the graph building start instruction, the graph computing flow unit 1012 may read graph building block information from the memory unit 1017 based on the target address. The graph building block information may include an operation method of each of N computing nodes in the directed graphflow computing architecture, a connection between the N computing nodes, and sequence information. The parameter transmission instruction may carry identifiers of M computing nodes and input parameters respectively corresponding to the identifiers of the M computing nodes. The M computing nodes are some or all of the N nodes. When receiving the parameter transmission instruction, the graph computing flow unit 1012 may respectively input, into the M computing nodes, the input parameters respectively corresponding to the identifiers of the M computing nodes. After receiving the graph computing start instruction, the graph computing flow unit 1012 may determine whether current graph building is completed, and if current graph building is completed, start to execute a corresponding computing task. The parameter return instruction may carry identifiers of K computing nodes and result registers respectively corresponding to the identifiers of the K computing nodes. The graph computing flow unit 1012 may control to separately send computing results of the K computing nodes to a result write-back unit 1014, and the result write-back unit 1014 writes the results of the corresponding computing nodes to the corresponding result registers.

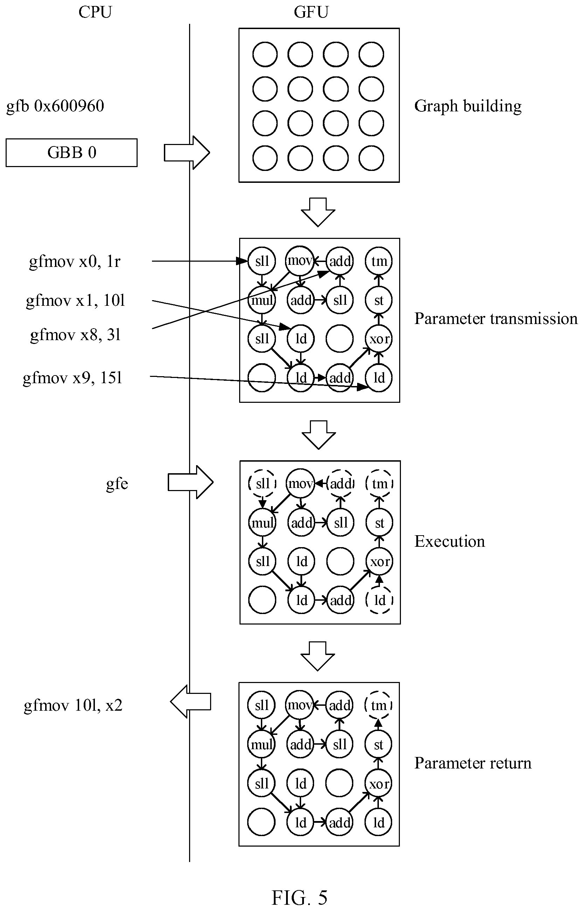

For example, FIG. 5 is a schematic diagram of different control instructions according to an embodiment of this application. In FIG. 5, a graph building start instruction is gfb 0x600960. Herein, gfb is an operation code, and 0x600960 is an operand and is an address in a memory unit 1017. A graph computing flow unit 1012 may obtain graph building block information corresponding to the address 0x600960 from the memory unit 1012 based on the graph building start instruction, to start graph building. In FIG. 5, a parameter transmission instruction includes "gfmov x0, 1r", "gfmov x1, 10l", "gfmov x8, 2l", and "gfmov x9, 15l". A 1^{st} parameter transmission instruction means that a parameter value in a register x0 is used as a right input parameter in a computing node 1, a second parameter transmission instruction means that a parameter value in a register x1 is used as a left input parameter in a computing node 10, and so on, which are not listed one by one herein. In a graph computing execution stage, a graph computing instruction gflow <GBB_address> is started, to trigger a graph computing flow unit 1012 to check whether a GFU has completed graph building, and whether an address <GBB_address> of a previously started graph building block is the same as that of an executed graph building block. If the address of the previously started graph building block is different from that of the executed graph building block, the graph building unit needs to be restarted to perform graph building again. If the address of the previously started graph building block is the same as that of the executed graph building block, graph computing may be started immediately. In FIG. 5, a parameter return instruction is "gfmov 10l, x2". The graph computing flow unit 1012 may send a left input parameter of a computing node 10 to a result write-back unit 1014, to write a result to a register x2.

After a directed graphflow computing architecture is introduced, the following describes a graph instruction in the directed graph computing architecture. In the directed graph computing architecture, a majority of graph instructions each usually have two data inputs and one or two output addresses, a minority of graph instructions each have at least three data inputs or at least three output addresses, and a buffer configured to temporarily store a data input of one graph instruction and an instruction format used to indicate an output address are configured based on two data inputs and two output addresses. In other words, one graph instruction is provided with buffer space of only two inputs. For example, if buffer space of one input is 64 bits, buffer space corresponding to one graph instruction is 128 bits. An instruction format of one graph instruction is usually an instruction ID+opcode (operator)+dest0+dest1, and dest0 and dest1 are two output addresses.

For a graph instruction having two data inputs or a graph instruction having two output addresses, a processor may process the corresponding graph instruction based on an existing configuration. For a graph instruction having at least three data inputs, the at least three data inputs usually includes one or two dynamic data inputs and one or more static data inputs. In an existing configuration of a buffer of a data input, in this embodiment of this application, the one or more static data inputs are stored in a register, to implement processing of the graph instruction. A detailed process is described as follows. For a graph instruction having at least three output addresses, in an existing configuration of an instruction format, in this embodiment of this application, one or more output addresses are stored in the register, to implement processing of the graph instruction. A detailed process is described as follows.

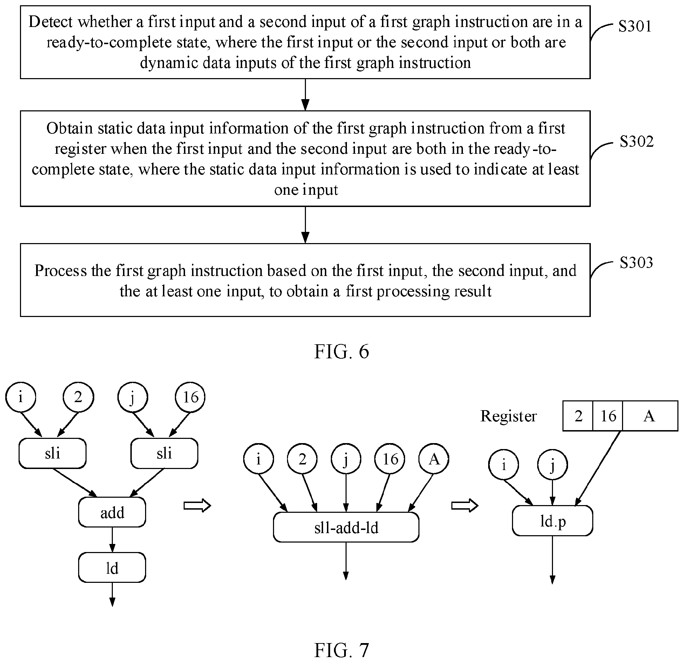

FIG. 6 is a schematic flowchart of a graph instruction processing method according to an embodiment of this application. The method may be applied to the foregoing provided processor. The method may include the following steps.

S301: Detect whether a first input and a second input of a first graph instruction are in a ready-to-complete state, where the first input and/or the second input are or is a dynamic data input or dynamic data inputs of the first graph instruction.

A graph instruction may be a graph instruction in an instruction set of a directed graph computing architecture, the instruction set may include a plurality of graph instructions, and the first graph instruction may be a graph instruction having at least three inputs in the instruction set. For example, the first graph instruction may be a composite graph instruction obtained by compressing a plurality of graph instructions. The at least three inputs of the first graph instruction may include a dynamic data input and a static data input. The dynamic data input may be a data input that dynamically changes, and the data input that dynamically changes may also be referred to as a variable. The static data input may be a data input that does not change or a data input that does not change in a period of time. The data that does not change may also be referred to as a constant, and the data that does not change in the period of time may also be a temporary constant.

In addition, the first graph instruction may correspond to one or more ready (ready) bitfields and one or more valid (valid) bitfields. The valid bitfield of the first graph instruction may be used to indicate whether the first graph instruction requires input data flow information, and the data flow information may include two inputs in the at least three inputs of the first graph instruction. The two inputs may be respectively the first input and the second input. The first input and the second input each may be a dynamic data input, or one of the first input and the second input may be a dynamic data input and the other may be a static data input (for example, the first graph instruction have only one dynamic data input). The first input and the second input may also be respectively referred to as a left input and a right input. The ready bitfield of the first graph instruction may be used to indicate whether the data flow information of the first graph instruction is ready, for example, indicate whether the first input and the second input in the data flow information are ready. For example, a graph instruction of an AND operation "a+b+2" is used as an example. A valid bitfield of the graph instruction may be used to indicate that data flow information required by the graph instruction includes a first input a and a second input b, and a ready bitfield of the graph instruction may be used to indicate whether a and b are ready.

Further, in this embodiment of this application, whether the first input and the second input of the first graph instruction are in the ready-to-complete state may mean that the first input and the second input are both ready (which may also be referred to as that both arrive). For example, the ready bitfield of the first graph instruction indicates that the first input and the second input of the first graph instruction both arrive. In other words, the first input and the second input of the first graph instruction are both in the ready-to-complete state.

Specifically, the processor may detect whether the first input and the second input of the first graph instruction are ready (which is also referred to as whether the first input and the second input of the first graph instruction arrive). When the first input and the second input are both ready (for example, the ready bitfield of the first graph instruction indicates that a left input and a right input of the first graph instruction both arrive), the processor may determine that the first input and the second input of the first graph instruction are both in the ready-to-complete state. If neither the first input nor the second input of the first graph instruction is ready or one of the first input and the second input is not ready, the processor may determine that neither the first input nor the second input of the first graph instruction is in the ready-to-complete state.

S302: Obtain static data input information of the first graph instruction from a first register when the first input and the second input are both in the ready-to-complete state, where the static data input information is used to indicate at least one input.

The first register may be a register configured to store the static data input of the first graph instruction, and the static data input of the first graph instruction may be specifically stored in the first register in a graph building stage. The at least one input may be an input other than the first input and the second input in the at least three inputs of the first graph instruction.

In addition, the first graph instruction may be correspondingly provided with an input pointer bitfield, the input pointer bitfield may include a first pointer, and the first pointer may be used to indicate the first register. For example, when the processor stores the at least one input in the first register in the graph building stage, the processor may set the input pointer bitfield of the first graph instruction to the first pointer of the first register.

Specifically, when the first input and the second input are both in the ready-to-complete state, the processor may determine the first register based on the first pointer, and obtain the static data input information of the first graph instruction from the first register. When the at least one input indicated by the static data input information includes only one input, the processor may directly obtain the one input from the first register. When the at least one input indicated by the static data input information includes at least a plurality of inputs (namely, two or more inputs), the processor may further decode the static data input information based on a preset decoding policy associated with an operator of the first graph instruction, to obtain the plurality of inputs. Herein, the preset decoding policy associated with the operator of the first graph instruction may be used to indicate a dependency relationship among a plurality of operators included in the first graph instruction, related indication information of a data input corresponding to each operator, or the like.

For example, as shown in FIG. 7, it is assumed that the first graph instruction is a composite graph instruction obtained by compressing four graph instructions. The four graph instructions and a dependency relationship between the four graph instructions are specifically a first sli instruction whose left input is i and right input is 2, a second sli instruction whose left input is j and right input is 16, an add instruction whose left input is an output of the first sli instruction and right input is an output of the second sli instruction, and an ld instruction whose left input is an output of the add instruction and right input is A. The composite graph instruction obtained by compressing the four graph instructions may be an sll-add-ld instruction having a total of five data inputs i, 2, j, 16, and A, i and j in the five data inputs may be dynamic data inputs, and 2, 16, and A may be static data inputs. In this application, an operator corresponding to the composite graph instruction may be represented as ld.p, i and j may be respectively used as the first input and the second input, and 2, 16, and A may be stored in the first register. Specifically, when the processor detects that i and j of the graph instruction are both in the ready-to-complete state, the processor may obtain static data input information of the graph instruction from the first register, and decode the obtained static data input information based on a preset decoding policy corresponding to ld.p, to obtain 2, 16, and A.

S303: Process the first graph instruction based on the first input, the second input, and the at least one input, to obtain a first processing result.

Specifically, when the processor obtains the at least one input, the processor may process the first graph instruction based on the first input, the second input, and the at least one input. To be specific, the processor may sequentially complete related computing of the plurality of operators based on the dependency relationship between the plurality of operators of the first graph instruction and a data input corresponding to each operator, to obtain the first processing result. FIG. 7 is used as an example. When the processor obtains 2, 16, and A, the processor may first process the first sli instruction based on i and 2, process the second sli instruction based onj and 16, process the add instruction based on an operation result of the first sli instruction and an operation result of the second sli instruction, and finally process the ld instruction based on an operation result of the add instruction and A, to obtain the first processing result.

In this embodiment of this application, for the first graph instruction having at least three inputs, the first input and the second input of the first graph instruction may be input through an input port, the first input and the second input may be dynamic data inputs, and at least one another input is stored in the first register. Subsequently, the processor may detect whether the first input and the second input are in the ready-to-complete state, and when the first input and the second input are in the ready-to-complete state, obtain the at least one input from the first register, to process the first graph instruction based on the first input, the second input, and the at least one input, to avoid interference of intermediate-state data of the first graph instruction to another data flow, reduce a transfer operation of the static data input of the first graph instruction, and increase reuse efficiency of the static data input.

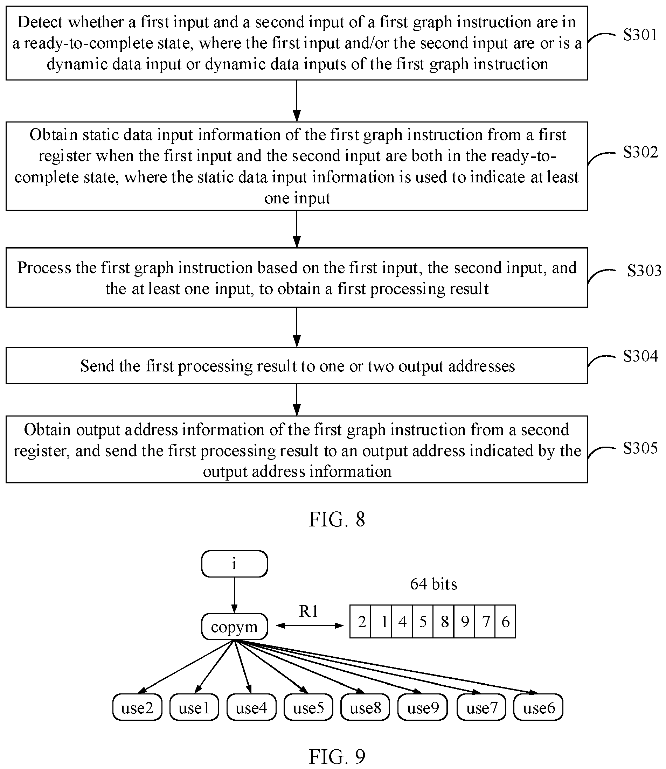

Further, the first graph instruction may have at least three output addresses, an output address bitfield of the first graph instruction may include one or two output addresses in the at least three output addresses, and an output address other than the one or two output addresses in the at least three output addresses is stored in the second register. Correspondingly, as shown in FIG. 8, the method further includes S304 and S305.

S304: Send the first processing result to the one or two output addresses.

The first graph instruction may be correspondingly provided with the output address bitfield, and a bit width of the output address bitfield may be fixed. For example, the bit width of the output address bitfield may be 32 bits. The output address bitfield may include one output address or two output addresses. When the output address bitfield includes one output address and the output address is a first output address, the processor may send the first processing result to the first output address. When the output address bitfield includes two output addresses and the two output addresses are a first output address and a second output address, the processor may respectively send the first processing result to the first output address and the second output address.

For example, when the processor includes a plurality of operation units and an operation unit that processes the first graph instruction is a first operation unit, the first operation unit may specifically send the first processing result to the one or two output addresses.

S305: Obtain output address information of the first graph instruction from the second register, and send the first processing result to an output address indicated by the output address information.

The second register may be used to store the output address other than the one or two output addresses in the at least three output addresses. For example, in the graph building stage, the processor may store the output address other than the one or two output addresses in the at least three output addresses in the second register.

In addition, when the output address bitfield includes one output address, the output address bitfield may further include a second pointer, and the second pointer may be used to indicate the second register. When the output address bitfield includes two output addresses, the first graph instruction may be further provided with an output pointer bitfield, the output pointer bitfield may include a second pointer, and the second pointer may be used to indicate the second register.

Specifically, the processor may determine the second register based on the second pointer, and obtain the output address information of the first graph instruction from the second register. The processor may further decode the output address information, to obtain one or more output addresses. The one or more output addresses are the output address other than the one or two output addresses in the at least three output addresses. The processor may send the first processing result to each of the one or more output addresses.

Optionally, when the processor includes a plurality of operation units and an operation unit that processes the first graph instruction is a first operation unit, the first operation unit may specifically send the first processing result to a second operation in the plurality of operation units, and the second operation unit may send the first processing result to each of the one or more output addresses. The second operation unit may make full use of a bus bandwidth, and send the first processing result to the one or more output addresses by using a bus resource in an idle state without disturbing another data flow, to realize efficient use of a bus communications load. Herein, the first operation unit and the second operation unit may be specifically a graph computing flow unit in the foregoing provided processor architecture.

As shown in FIG. 9, it is assumed that the first processing result is i, and an instruction for transmitting the first processing result to the one or more output addresses is copym. A bit width of a second register R1 is 64 bits, and stored output address information is 2 1 4 5 8 9 7 6. When the instruction copym receives the first processing result i, the instruction copym is transmitted to the second operation unit. The second operation unit obtains the output address information 2 14 5 8 9 7 6 from the second register, and parses the output address information 2 14 5 8 9 7 6 into use2, use1, use4, use5, use8, use9, use7, and use6. The second operation unit may separately send the first processing result i to use2, use1, use4, use5, use8, use9, use7, and use6.

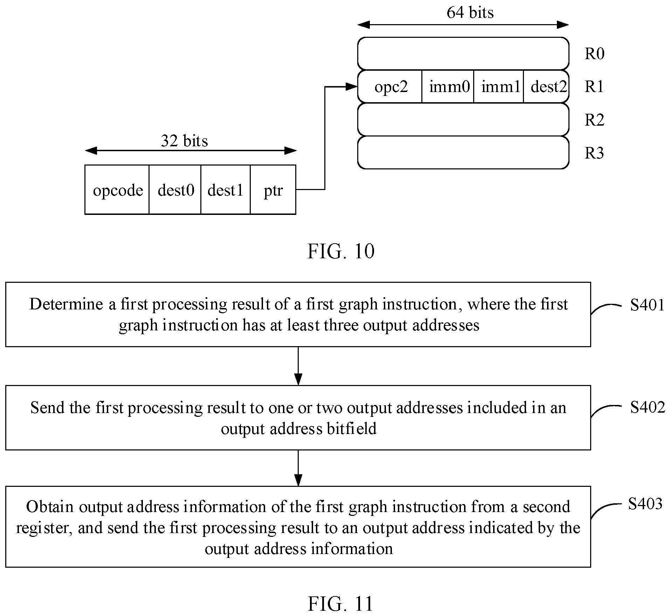

Further, when the first graph instruction has a plurality of inputs and a plurality of output addresses, the first register and second register may be a same register, so that the first pointer and second pointer may be a same pointer. For example, as shown in FIG. 10, it is assumed that the first graph instruction has three static data inputs and three output addresses, the three static data inputs are respectively opc2, imm0, and imm1, the three output addresses are respectively dest0, dest1, and dest2, a corresponding register is R1, and a pointer corresponding to R1 is ptr. Therefore, a format of the first graph instruction may be opcode+dest0+dest1+ptr, and R1 may store opc2, imm0, imm1, and dest2. In FIG. 10, descriptions are provided by using an example in which a buffer bit width corresponding to the first instruction is 32 bits and R1 is 64 bits, and opcode represents an operator.

In this embodiment of this application, for the first graph instruction having at least three data inputs, the at least three data inputs usually include one or two dynamic data inputs and one or more static data inputs, and the one or more static data inputs may be stored in the first register. Subsequently, the processor may process the first graph instruction by detecting whether the first input and the second input of the first graph instruction are in the ready-to-complete state, and obtaining the static data input of the first graph instruction from the first register when the first input and the second input are in the ready-to-complete state, to avoid interference of intermediate-state data of the first graph instruction to another data flow, reduce a transfer operation of the static data input of the first graph instruction, increase reuse efficiency of the static data input, and improve performance of a directed graphflow computing architecture.

Further, when the first graph instruction has at least three output addresses, one or more output addresses in the at least three output addresses may be stored in the second register, so that it can be ensured that a graph instruction having at least three output addresses in an instruction set is configured in a directed graphflow computing architecture in a regular format. Subsequently, when the first processing result of the first graph instruction is output, one or more output addresses of the first graph instruction may be obtained from the second register, and the first processing result may be sent to each output address, to implement result processing of a graph instruction having at least three output addresses. In addition, compared with the conventional technology, in the method, instruction space is not wasted, and large power consumption is not generated, to ensure that a computing architecture has better performance.

FIG. 11 is a schematic flowchart of a graph instruction processing method according to an embodiment of this application. The method may be applied to the foregoing provided processor. The method may include the following steps.

S401: Determine a first processing result of a first graph instruction, where the first graph instruction has at least three output addresses.

The first graph instruction may be any graph instruction in an instruction set of a directed graph computing architecture. For example, the first graph instruction may be a graph instruction having two inputs, or may be a graph instruction having at least three inputs. Specifically, when the first graph instruction is a graph instruction having two inputs, the processor may determine the first processing result of the first graph instruction in a method in the conventional technology; or when the first graph instruction is a graph instruction having at least three inputs, the processor may determine the first processing result of the first graph instruction in the graph instruction processing method for a graph instruction having a plurality of inputs provided in this application.

In addition, the first graph instruction may be correspondingly provided with an output address bitfield, and a bit width of the output address bitfield may be fixed. For example, the bit width of the output address bitfield may be 32 bits. For the at least three output addresses of the first graph instruction, the output address bitfield of the first graph instruction may be used to indicate one or two output addresses in the at least three output addresses, and an output address other than the one or two output addresses in the at least three output addresses may be stored in a second register. For example, when the output address bitfield includes one output address and the output address is a first output address, an output address other than the first output address in the at least three output addresses may be stored in the second register. When the output address bitfield includes two output addresses and the two output addresses are a first output address and a second output address, an output address other than the first output address and the second output address in the at least three output addresses may be stored in the second register.

S402: Send the first processing result to the one or two output addresses included in the output address bitfield.

Specifically, when the output address bitfield of the first graph instruction includes the first output address, the processor may send the first processing result to the first output address; or when the output address bitfield of the first graph instruction includes the first output address and the second output address, the processor may respectively send the first processing result to the first output address and the second output address.

For example, when the processor includes a plurality of operation units and an operation unit that processes the first graph instruction is a first operation unit, the first operation unit may specifically send the first processing result to the first output address, or the first output address and the second output address.

S403: Obtain output address information of the first graph instruction from the second register, and send the first processing result to an output address indicated by the output address information.

In a graph building stage, the processor may store the output address other than the one or two output addresses in the at least three output addresses in the second register. When the output address bitfield includes one output address, the output address bitfield may further include a second pointer, and the second pointer may be used to indicate the second register. When the output address bitfield includes two output addresses, the first graph instruction may be further provided with an output pointer bitfield, the output pointer bitfield may include a second pointer, and the second pointer may be used to indicate the second register.

Specifically, the processor may determine the second register based on the second pointer, and obtain the output address information of the first graph instruction from the second register. The processor may further decode the output address information, to obtain one or more output addresses. The one or more output addresses are the output address other than the one or two output addresses in the at least three output addresses. The processor may send the first processing result to each of the one or more output addresses.

Optionally, when the processor includes a plurality of operation units and an operation unit that processes the first graph instruction is a first operation unit, the first operation unit may specifically send the first processing result to a second operation in the plurality of operation units, and the second operation unit may send the first processing result to each of the one or more output addresses. The second operation unit may make full use of a bus bandwidth, and send the first processing result to the one or more output addresses by using a bus resource in an idle state without disturbing another data flow, to realize efficient use of a bus communications load. Herein, the first operation unit and the second operation unit may be specifically a graph computing flow unit in the foregoing provided processor architecture.

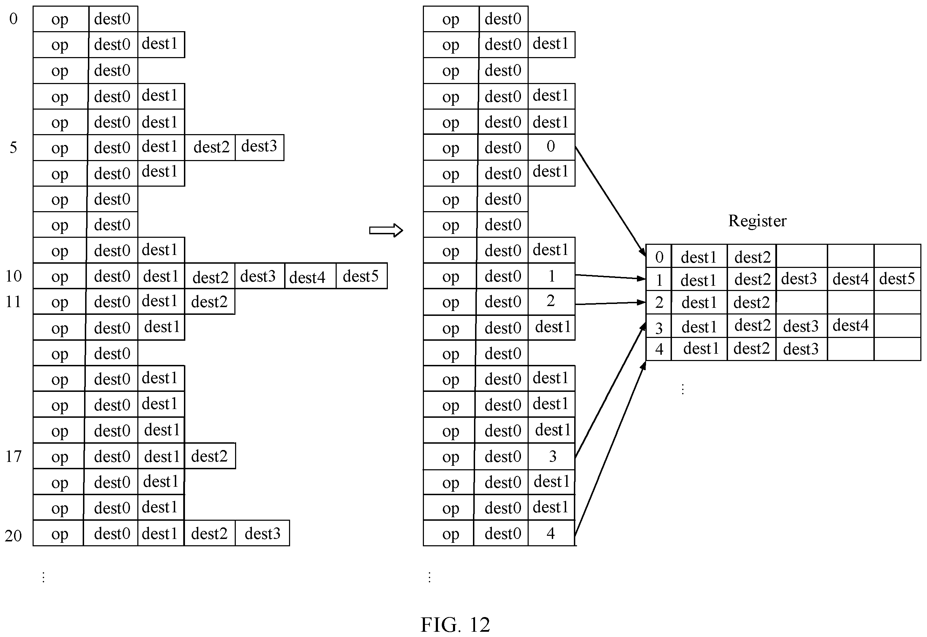

For example, it is assumed that a plurality of graph instructions included in an instruction set of a directed graph are shown in FIG. 12, and a 5^{th} graph instruction, a 10^{th} graph instruction, an 11^{th} graph instruction, a 17^{th} graph instruction, and a 20^{th} graph instruction in the plurality of graph instructions each have at least three output addresses. Therefore, descriptions are provided by using an example in which the output address bitfield includes one output address and a pointer, and an output address other than dest0 in output addresses of the graph instructions may be stored in a register. Specifically, output addresses dest1 to dest3 of the 5^{th} graph instruction are stored in a register whose pointer is 0, output addresses dest1 to dest5 of the 10^{th} graph instruction are stored in a register whose pointer is 1, output addresses dest1 and dest2 of the 11^{th} graph instruction are stored in a register whose pointer is 2, output addresses dest1 and dest2 of the 17^{th} graph instruction are stored in a register whose pointer is 3, and output addresses dest1 to dest4 of the 20^{th} graph instruction are stored in a register whose pointer is 4. In FIG. 12, op represents an operator of a graph instruction.

In this embodiment of this application, when the first graph instruction has at least three output addresses, one or more output addresses in the at least three output addresses may be stored in the second register, so that it can be ensured that a graph instruction having at least three output addresses in an instruction set is configured in a directed graphflow computing architecture in a regular format. Subsequently, when the first processing result of the first graph instruction is output, one or more output addresses of the first graph instruction may be obtained from the second register, and the first processing result may be sent to each output address, to implement result processing of a graph instruction having at least three output addresses. In addition, compared with the conventional technology, in the method, instruction space is not wasted, and large power consumption is not generated, to ensure that a computing architecture has better performance.

In embodiments of this application, the graph instruction processing apparatus may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

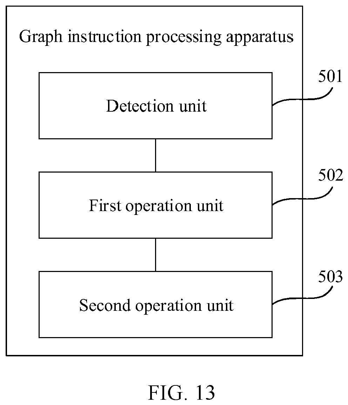

When each functional module is obtained through division for each corresponding function, FIG. 13 is a schematic diagram of a possible structure of a graph instruction processing apparatus in the foregoing embodiments. The apparatus may be a processor or a graph instruction processing device including the processor. As shown in FIG. 13, the apparatus includes a detection unit 501, a first operation unit 502, and a second operation unit 503.

In a possible embodiment, the detection unit 501 is configured to support the apparatus to perform S301 in the method embodiments, the first operation unit 502 is configured to support the apparatus to perform S302, S303, and S304 in the method embodiments, and the second operation unit 503 is configured to support the apparatus to perform S305 in the method embodiments. In another possible embodiment, the first operation unit 502 is configured to support the apparatus to perform S401 and S402 in the method embodiments, and the second operation unit 503 is configured to support the apparatus to perform S403 in the method embodiments.

It should be noted that, all related content of steps in the foregoing method embodiments may be cited in function descriptions of corresponding functional modules. Details are not described herein again.

Based on a hardware implementation, the detection unit 501 in this application may be an instruction scheduling unit, and the first operation unit 502 and the second operation unit 503 may be a graph computing flow unit.

An embodiment of this application further provides a graph instruction processing apparatus. A specific structure of the apparatus is shown in FIG. 2 or FIG. 3. FIG. 2 is used as an example. The apparatus includes an instruction scheduling unit 1011, a graph computing flow unit 1012, and a generic operation unit 1013.

In a possible embodiment, the instruction scheduling unit 1011 is configured to support the apparatus to perform S301 in the method embodiments; there may be two graph computing flow units 1012, one graph computing flow unit 1012 is configured to support the apparatus to perform S302, S303, and S304 in the method embodiments, and the other graph computing flow unit 1012 is configured to support the apparatus to perform S305 in the method embodiments. In another possible embodiment, there may be two graph computing flow units 1012, one graph computing flow unit 1012 is configured to support the apparatus to perform S401 and S402 in the method embodiments, and the other graph computing flow unit 1012 is configured to support the apparatus to perform S403 in the method embodiments.

In this embodiment of this application, for a first graph instruction having at least three data inputs, the at least three data inputs usually include one or two dynamic data inputs and one or more static data inputs, and the one or more static data inputs may be stored in a first register. Subsequently, a processor may process the first graph instruction by detecting whether a first input and a second input of the first graph instruction are in a ready-to-complete state, and obtaining a static data input of the first graph instruction from the first register when the first input and the second input are in the ready-to-complete state, to avoid interference of intermediate-state data of the first graph instruction to another data flow, reduce a transfer operation of the static data input of the first graph instruction, increase reuse efficiency of the static data input, and improve performance of a directed graphflow computing architecture.

Further, when the first graph instruction has at least three output addresses, one or more output addresses in the at least three output addresses may be stored in a second register, so that it can be ensured that a graph instruction having at least three output addresses in an instruction set is configured in a directed graphflow computing architecture in a regular format. Subsequently, when a first processing result of the first graph instruction is output, one or more output addresses of the first graph instruction may be obtained from the second register, and the first processing result may be sent to each output address, to implement result processing of a graph instruction having at least three output addresses. In addition, compared with the conventional technology, in the method, instruction space is not wasted, and large power consumption is not generated, to ensure that a computing architecture has better performance.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

Based on this, an embodiment of this application further provides a readable storage medium. The readable storage medium stores instructions. When the readable storage medium runs on a device, the device is enabled to perform one or more steps in the method embodiment in FIG. 6 or FIG. 8.

An embodiment of this application further provides a readable storage medium. The readable storage medium stores instructions. When the readable storage medium runs on a device, the device is enabled to perform one or more steps in the method embodiment in FIG. 11.

An embodiment of this application further provides a computer program product. When the computer program product runs on a computer, the computer is enabled to perform one or more steps in the method embodiment in FIG. 6 or FIG. 8.

Another aspect of this application provides a computer program product. When the computer program product runs on a computer, the computer is enabled to perform one or more steps in the method embodiment in FIG. 11.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for processing a graph instruction in a directed graphflow computing architecture, wherein the method comprises:
detecting (S301) whether a first input and a second input of a first graph instruction are in a ready-to-complete state, wherein the first input and/or the second input are or is a dynamic data input or dynamic data inputs of the first graph instruction, wherein the first graph instruction corresponds to a valid bitfield which indicates whether the first input and the second input are in the ready-to-complete state, and wherein the ready-to-complete state indicates that the first input and the second input are ready, and wherein the dynamic data input is a data input that dynamically changes;
obtaining (S302) static data input information of the first graph instruction from a first register when the first input and the second input are both in the ready-to-complete state, wherein the static data input information is used to indicate at least one input, and wherein the static data input is a data input that does not change in a period of time; and
processing (S303) the first graph instruction based on the first input, the second input, and the at least one input, to obtain a first processing result.

2. The method according to claim 1, wherein the first graph instruction is provided with an input pointer bitfield, the input pointer bitfield comprises a first pointer, and the first pointer is used to indicate the first register.

3. The method according to claim 1 or 2, wherein each of the at least one input is a constant input or a temporary constant input; and
the temporary constant input is an input that does not change in a period of time.

4. The method according to any one of claims 1 to 3, wherein the at least one input comprises a plurality of inputs, and the method further comprises:
decoding the static data input information based on a preset decoding policy associated with an operator of the first graph instruction, to obtain the plurality of inputs.

5. The method according to any one of claims 1 to 4, wherein the first graph instruction has at least three output addresses, an output address bitfield of the first graph instruction is used to indicate one or two output addresses in the at least three output addresses, an output address other than the one or two output addresses in the at least three output addresses is stored in a second register, and the method further comprises:
sending the first processing result to the one or two output addresses; and
obtaining output address information of the first graph instruction from the second register, and sending the first processing result to an output address indicated by the output address information.

6. The method according to claim 5, wherein the output address bitfield comprises one output address and a second pointer, and the second pointer is used to indicate the second register.

7. The method according to claim 5, wherein the output address bitfield comprises two output addresses, the first graph instruction is further provided with an output pointer bitfield, the output pointer bitfield comprises a second pointer, and the second pointer is used to indicate the second register.

8. A graph instruction processing apparatus, wherein the apparatus comprises:
a detection unit (501), configured to detect whether a first input and a second input of a first graph instruction are in a ready-to-complete state, wherein the first input and/or the second input are or is a dynamic data input or dynamic data inputs of the first graph instruction, wherein the first graph instruction corresponds to a valid bitfield which indicates whether the first input and the second input are in the ready-to-complete state, and wherein the ready-to-complete state indicates that the first input and the second input are ready, and wherein the dynamic data input is a data input that dynamically changes; and
a first operation unit (502), configured to obtain static data input information of the first graph instruction from a first register when the first input and the second input are both in the ready-to-complete state, wherein the static data input information is used to indicate at least one input, and wherein the static data input is a data input that does not change in a period of time, and wherein
the first operation (502) unit is further configured to process the first graph instruction based on the first input, the second input, and the at least one input, to obtain a first processing result.

9. The apparatus according to claim 8, wherein the first graph instruction is provided with an input pointer bitfield, the input pointer bitfield comprises a first pointer, and the first pointer is used to indicate the first register.

10. The apparatus according to claim 8 or 9, wherein each of the at least one input is a constant input or a temporary constant input; and
the temporary constant input is an input that does not change in a period of time.

11. The apparatus according to any one of claims 8 to 10, wherein the at least one input comprises a plurality of inputs, and the first operation unit (502) is further configured to:
decode the static data input information based on a preset decoding policy associated with an operator of the first graph instruction, to obtain the plurality of inputs.

12. The apparatus according to any one of claims 8 to 11, wherein the first graph instruction has at least three output addresses, an output address bitfield of the first graph instruction is used to indicate one or two output addresses in the at least three output addresses, an output address other than the one or two output addresses in the at least three output addresses is stored in a second register, and the apparatus further comprises a second operation unit;
the first operation unit is further configured to send the first processing result to the one or two output addresses; and
the second operation unit is configured to: obtain output address information of the first graph instruction from the second register, and send the first processing result to an output address indicated by the output address information.

13. The apparatus according to claim 12, wherein the output address bitfield comprises one output address and a second pointer, and the second pointer is used to indicate the second register.

14. The apparatus according to claim 12, wherein the output address bitfield comprises two output addresses, the first graph instruction is further provided with an output pointer bitfield, the output pointer bitfield comprises a second pointer, and the second pointer is used to indicate the second register.

15. A readable storage medium, wherein the readable storage medium stores instructions, and when the readable storage medium runs on a device, the device is enabled to perform the method according to any one of claims 1 to 7.

16. A computer program product, wherein when the computer program product runs on a computer, the computer is enabled to perform the method according to any one of claims 1 to 7.

## Patentansprüche

1. Verfahren zum Verarbeiten einer Graphanweisung in einer gerichteten Graphverlaufsrechenarchitektur, wobei das Verfahren Folgendes umfasst:
Detektieren (S301), ob sich eine erste Eingabe und eine zweite Eingabe einer ersten Graphanweisung in einem abschlussbereiten Zustand befinden, wobei die erste Eingabe und/oder die zweite Eingabe eine dynamische Dateneingabe oder dynamische Dateneingaben der ersten Graphanweisung sind oder ist, wobei die erste Graphanweisung einem gültigen Bitfeld entspricht, das anzeigt, ob sich die erste Eingabe und die zweite Eingabe in dem abschlussbereiten Zustand befinden, und wobei der abschlussbereite Zustand anzeigt, dass die erste Eingabe und die zweite Eingabe bereit sind, und wobei die dynamische Dateneingabe eine Dateneingabe ist, die sich dynamisch ändert;
Erhalten (S302) von statischen Dateneingabeinformationen der ersten Graphanweisung von einem ersten Register, wenn sich die erste Eingabe und die zweite Eingabe beide in dem abschlussbereiten Zustand befinden, wobei die statischen Dateneingabeinformationen verwendet werden, um mindestens eine Eingabe anzuzeigen, und wobei die statische Dateneingabe eine Dateneingabe ist, die sich in einem Zeitraum nicht ändert; und
Verarbeiten (S303) der ersten Graphanweisung basierend auf der ersten Eingabe, der zweiten Eingabe und der mindestens einen Eingabe, um ein erstes Verarbeitungsergebnis zu erhalten.

2. Verfahren nach Anspruch 1, wobei die erste Graphanweisung mit einem Eingabezeigerbitfeld versehen ist, wobei das Eingabezeigerbitfeld einen ersten Zeiger umfasst, und wobei der erste Zeiger verwendet wird, um das erste Register anzuzeigen.

3. Verfahren nach Anspruch 1 oder 2, wobei jede der mindestens einen Eingabe eine konstante Eingabe oder eine temporäre konstante Eingabe ist; und
wobei die temporäre konstante Eingabe eine Eingabe ist, die sich in einem Zeitraum nicht ändert.

4. Verfahren nach einem der Ansprüche 1 bis 3, wobei die mindestens eine Eingabe eine Mehrzahl von Eingaben umfasst, und wobei das Verfahren ferner Folgendes umfasst:
Decodieren der statischen Dateneingabeinformationen basierend auf einer voreingestellten Decodierungsrichtlinie, die einem Operator der ersten Graphanweisung zugeordnet ist, um die Mehrzahl von Eingaben zu erhalten.

5. Verfahren nach einem der Ansprüche 1 bis 4, wobei die erste Graphanweisung mindestens drei Ausgabeadressen umfasst, wobei ein Ausgabeadressenbitfeld der ersten Graphanweisung verwendet wird, um eine oder zwei Ausgabeadressen in den mindestens drei Ausgabeadressen anzuzeigen, wobei eine andere Ausgabeadresse als die eine oder zwei Ausgabeadressen in den mindestens drei Ausgabeadressen in einem zweiten Register gespeichert wird, und wobei das Verfahren ferner Folgendes umfasst:
Senden des ersten Verarbeitungsergebnisses an die eine oder zwei Ausgabeadressen; und
Erhalten von Ausgabeadressinformationen der ersten Graphanweisung von dem zweiten Register, und Senden des ersten Verarbeitungsergebnisses an eine Ausgabeadresse, die durch die Ausgabeadressinformationen angezeigt wird.

6. Verfahren nach Anspruch 5, wobei das Ausgabeadressenbitfeld eine Ausgabeadresse und einen zweiten Zeiger umfasst, und wobei der zweite Zeiger verwendet wird, um das zweite Register anzuzeigen.

7. Verfahren nach Anspruch 5, wobei das Ausgabeadressenbitfeld zwei Ausgabeadressen umfasst, wobei die erste Graphanweisung ferner mit einem Ausgabezeigerbitfeld versehen ist, wobei das Ausgabezeigerbitfeld einen zweiten Zeiger umfasst, und wobei der zweite Zeiger verwendet wird, um das zweite Register anzuzeigen.

8. Graphanweisungsverarbeitungsvorrichtung, wobei die Vorrichtung Folgendes umfasst:
eine Detektionseinheit (501), die dazu konfiguriert ist, zu detektieren, ob sich eine erste Eingabe und eine zweite Eingabe einer ersten Graphanweisung in einem abschlussbereiten Zustand befinden, wobei die erste Eingabe und/oder die zweite Eingabe eine dynamische Dateneingabe oder dynamische Dateneingaben der ersten Graphanweisung sind oder ist, wobei die erste Graphanweisung einem gültigen Bitfeld entspricht, das anzeigt, ob sich die erste Eingabe und die zweite Eingabe in dem abschlussbereiten Zustand befinden, und wobei der abschlussbereite Zustand anzeigt, dass die erste Eingabe und die zweite Eingabe bereit sind, und wobei die dynamische Dateneingabe eine Dateneingabe ist, die sich dynamisch ändert; und
eine erste Operationseinheit (502), die dazu konfiguriert ist, statische Dateneingabeinformationen der ersten Graphanweisung von einem ersten Register zu erhalten, wenn sich die erste Eingabe und die zweite Eingabe beide in dem abschlussbereiten Zustand befinden, wobei die statischen Dateneingabeinformationen verwendet werden, um mindestens eine Eingabe anzuzeigen, und wobei die statische Dateneingabe eine Dateneingabe ist, die sich in einem Zeitraum nicht ändert, und wobei
die erste Operations(502)-Einheit ferner dazu konfiguriert ist, die erste Graphanweisung basierend auf der ersten Eingabe, der zweiten Eingabe und der mindestens einen Eingabe zu verarbeiten, um ein erstes Verarbeitungsergebnis zu erhalten.

9. Vorrichtung nach Anspruch 8, wobei die erste Graphanweisung mit einem Eingabezeigerbitfeld versehen ist, wobei das Eingabezeigerbitfeld einen ersten Zeiger umfasst, und wobei der erste Zeiger verwendet wird, um das erste Register anzuzeigen.

10. Vorrichtung nach Anspruch 8 oder 9, wobei jede der mindestens einen Eingabe eine konstante Eingabe oder eine temporäre konstante Eingabe ist; und
wobei die temporäre konstante Eingabe eine Eingabe ist, die sich in einem Zeitraum nicht ändert.

11. Vorrichtung nach einem der Ansprüche 8 bis 10, wobei die mindestens eine Eingabe eine Mehrzahl von Eingaben umfasst, und wobei die erste Operationseinheit (502) ferner zu Folgendem konfiguriert ist:
Decodieren der statischen Dateneingabeinformationen basierend auf einer voreingestellten Decodierungsrichtlinie, die einem Operator der ersten Graphanweisung zugeordnet ist, um die Mehrzahl von Eingaben zu erhalten.

12. Vorrichtung nach einem der Ansprüche 8 bis 11, wobei die erste Graphanweisung mindestens drei Ausgabeadressen umfasst, wobei ein Ausgabeadressenbitfeld der ersten Graphanweisung verwendet wird, um eine oder zwei Ausgabeadressen in den mindestens drei Ausgabeadressen anzuzeigen, wobei eine andere Ausgabeadresse als die eine oder zwei Ausgabeadressen in den mindestens drei Ausgabeadressen in einem zweiten Register gespeichert wird, und wobei die Vorrichtung ferner eine zweite Operationseinheit umfasst,
wobei die erste Operationseinheit ferner dazu konfiguriert ist, das erste Verarbeitungsergebnis an die eine oder zwei Ausgabeadressen zu senden; und
wobei die zweite Operationseinheit zu Folgendem konfiguriert ist: Erhalten von Ausgabeadressinformationen der ersten Graphanweisung von dem zweiten Register, und Senden des ersten Verarbeitungsergebnisses an eine Ausgabeadresse, die durch die Ausgabeadressinformationen angezeigt wird.

13. Vorrichtung nach Anspruch 12, wobei das Ausgabeadressenbitfeld eine Ausgabeadresse und einen zweiten Zeiger umfasst, und wobei der zweite Zeiger verwendet wird, um das zweite Register anzuzeigen.

14. Vorrichtung nach Anspruch 12, wobei das Ausgabeadressenbitfeld zwei Ausgabeadressen umfasst, wobei die erste Graphanweisung ferner mit einem Ausgabezeigerbitfeld versehen ist, wobei das Ausgabezeigerbitfeld einen zweiten Zeiger umfasst, und wobei der zweite Zeiger verwendet wird, um das zweite Register anzuzeigen.

15. Lesbares Speichermedium, wobei das lesbare Speichermedium Anweisungen speichert, und wobei, wenn das lesbare Speichermedium auf einem Gerät ausgeführt wird, dem Gerät ermöglicht wird, das Verfahren nach einem der Ansprüche 1 bis 7 durchzuführen.

16. Computerprogrammprodukt, wobei, wenn das Computerprogrammprodukt auf einem Computer ausgeführt wird, dem Computer ermöglicht wird, das Verfahren nach einem der Ansprüche 1 bis 7 durchzuführen.

## Revendications

1. Procédé de traitement d'une instruction de graphe dans une architecture informatique de flux de graphes orientés, dans lequel le procédé comprend :
la détection (S301) de si oui ou non une première entrée et une seconde entrée d'une première instruction de graphe sont dans un état prêt à remplir, dans lequel la première entrée et/ou la seconde entrée est ou sont une entrée de données dynamique ou des entrées de données dynamiques de la première instruction de graphe, dans lequel la première instruction de graphe correspond à un champ de bits valide qui indique si oui ou non la première entrée et la seconde entrée sont dans un état prêt à remplir, et dans lequel l'état prêt à remplir indique que la première entrée et la seconde entrée sont prêtes, et dans lequel l'entrée de données dynamique est une entrée dynamique qui change de façon dynamique ;
l'obtention (S302) d'informations d'entrée de données statique de la première instruction de graphe à partir d'un premier registre lorsque la première entrée et la seconde entrée sont toutes deux dans l'état prêt à remplir, dans lequel les informations d'entrée de données statique sont utilisées pour indiquer au moins une entrée, et dans lequel l'entrée de données statique est une entrée de données qui ne change pas pendant une période de temps ; et
le traitement (S303) de la première instruction de graphe sur la base de la première entrée, de la seconde entrée, et de l'au moins une entrée, pour obtenir un premier résultat de traitement.

2. Procédé selon la revendication 1, dans lequel la première instruction de graphe est dotée d'un champ de bits de pointeur d'entrée, le champ de bits de pointeur d'entrée comprend un premier pointeur, et le premier pointeur est utilisé pour indiquer le premier registre.

3. Procédé selon la revendication 1 ou 2, dans lequel chacune de la ou des entrées est une entrée constante ou une entrée constante temporaire ; et
l'entrée constante temporaire est une entrée qui ne change pas pendant une période de temps.

4. Procédé selon l'une quelconque des revendications 1 à 3, dans lequel la ou les entrées comprennent une pluralité d'entrées, et le procédé comprend en outre:
le décodage des informations d'entrée de données statique sur la base d'une politique de décodage prédéfinie associée à un opérateur de la première instruction de graphe, pour obtenir la pluralité d'entrées.

5. Procédé selon l'une quelconque des revendications 1 à 4, dans lequel la première instruction de graphe a au moins trois adresses de sortie, un champ de bits d'adresse de sortie de la première instruction de graphe est utilisé pour indiquer une ou deux adresses de sortie parmi les au moins trois adresses de sortie, une adresse de sortie autre que la ou les deux adresses de sortie parmi les au moins trois adresses de sortie est stockée dans un second registre, et le procédé comprend en outre :
l'envoi du premier résultat de traitement à la ou aux deux adresses de sortie ; et
l'obtention d'informations d'adresse de sortie de la première instruction de graphe à partir du second registre, et l'envoi du premier résultat de traitement à une adresse de sortie indiquée par les informations d'adresse de sortie.

6. Procédé selon la revendication 5, dans lequel le champ de bits d'adresse de sortie comprend une adresse de sortie et un second pointeur, et le second pointeur est utilisé pour indiquer le second registre.

7. Procédé selon la revendication 5, dans lequel le champ de bits d'adresse de sortie comprend deux adresses de sortie, la première instruction de graphe est en outre dotée d'un champ de bits de pointeur de sortie, le champ de bits de pointeur de sortie comprend un second pointeur, et le second pointeur est utilisé pour indiquer le second registre.

8. Appareil de traitement d'instruction de graphe, dans lequel l'appareil comprend :
une unité de détection (501), configurée pour détecter si oui ou non une première entrée et une seconde entrée d'une première instruction de graphe sont dans un état prêt à remplir, dans lequel la première entrée et/ou la seconde entrée est ou sont une entrée de données dynamique ou des entrées de données dynamiques de la première instruction de graphe, dans lequel la première instruction de graphe correspond à un champ de bits valide qui indique si oui ou non la première entrée et la seconde entrée sont dans un état prêt à remplir, et dans lequel l'état prêt à remplir indique que la première entrée et la seconde entrée sont prêtes, et dans lequel l'entrée de données dynamique est une entrée de données qui change de façon dynamique ; et
une première unité d'opération (502), configurée pour obtenir des informations d'entrée de données statique de la première instruction de graphe à partir d'un premier registre lorsque la première entrée et la seconde entrée sont toutes deux dans l'état prêt à remplir, dans lequel les informations d'entrée de données statique sont utilisées pour indiquer au moins une entrée, et dans lequel l'entrée de données statique est une entrée de données qui ne change pas pendant une période de temps ; et
la première unité d'opération (502) est en outre configurée pour traiter la première instruction de graphe sur la base de la première entrée, de la seconde entrée, et de l'au moins une entrée, pour obtenir un premier résultat de traitement.

9. Appareil selon la revendication 8, dans lequel la première instruction de graphe est dotée d'un champ de bits de pointeur d'entrée, le champ de bits de pointeur d'entrée comprend un premier pointeur, et le premier pointeur est utilisé pour indiquer le premier registre.

10. Appareil selon la revendication 8 ou 9, dans lequel chacune de la ou des entrées est une entrée constante ou une entrée constante temporaire ; et
l'entrée constante temporaire est une entrée qui ne change pas pendant une période de temps.

11. Appareil selon l'une quelconque des revendications 8 à 10, dans lequel la ou les entrées comprennent une pluralité d'entrées, et la première unité d'opération (502) est en outre configurée pour :
décoder les informations d'entrée de données statique sur la base d'une politique de décodage prédéfinie associée à un opérateur de la première instruction de graphe, pour obtenir la pluralité d'entrées.

12. Appareil selon l'une quelconque des revendications 8 à 11, dans lequel la première instruction de graphe a au moins trois adresses de sortie, un champ de bits d'adresse de sortie de la première instruction de graphe est utilisé pour indiquer une ou deux adresses de sortie parmi les au moins trois adresses de sortie, une adresse de sortie autre que la ou les deux adresses de sortie parmi les au moins trois adresses de sortie est stockée dans un second registre, et l'appareil comprend en outre une seconde unité d'opération ;
la première unité d'opération est en outre configurée pour envoyer le premier résultat de traitement à la ou aux deux adresses de sortie ; et
la seconde unité d'opération est configurée pour : obtenir des informations d'adresse de sortie de la première instruction de graphe depuis le second registre, et envoyer le premier résultat de traitement à une adresse de sortie indiquée par les informations d'adresse de sortie.

13. Appareil selon la revendication 12, dans lequel le champ de bits d'adresse de sortie comprend une adresse de sortie et un second pointeur, et le second pointeur est utilisé pour indiquer le second registre.

14. Appareil selon la revendication 12, dans lequel le champ de bits d'adresse de sortie comprend deux adresses de sortie, la première instruction de graphe est en outre dotée d'un champ de bits de pointeur de sortie, le champ de bits de pointeur de sortie comprend un second pointeur, et le second pointeur est utilisé pour indiquer le second registre.

15. Support de stockage lisible, dans lequel le support de stockage lisible stocke des instructions, et lorsque le support de stockage lisible est exécuté sur un dispositif, le dispositif est activé pour exécuter le procédé selon l'une quelconque des revendications 1 à 7.

16. Produit programme informatique, dans lequel lorsque le produit programme informatique est exécuté sur un ordinateur, l'ordinateur est activé pour exécuter le procédé selon l'une quelconque des revendications 1 à 7.
